# EUROPEAN PATENT SPECIFICATION

(11) **EP 3 879 783 B1**
(45) Date of publication and mention of the grant of the patent: **17.05.2023**
(21) Application number: 20763256.3
(22) Date of filing: 22.01.2020
(51) Int. Cl.: G06F 21/53, G06F 21/57, H04L 9/08, G06F 21/74, H04L 9/40

(54) **DATA SECURITY PROCESSING METHOD AND TERMINAL THEREOF**
DATENSICHERHEITVERARBEITUNGSVERFAHREN UND ENDGERÄT DAFÜR
PROCÉDÉ DE TRAITEMENT DE SÉCURITÉ DE DONNÉES ET SON TERMINAL

(30) Priority: 26.02.2019 CN 201910142774
(43) Date of publication of application: 15.09.2021
(73) Proprietor: Advanced New Technologies Co., Ltd., George Town, Grand Cayman KY1-9008 (KY)
(72) Inventor: LIU, Xiaoyun, Hangzhou, Zhejiang 311121 (CN)
(74) Representative: Goddar, Heinz J.
(86) International application number: PCT/CN2020/073733
(87) International publication number: WO 2020/173272

(56) References cited:
- CN-A- 108 055 129
- CN-A- 108 282 467
- CN-A- 109 040 147
- CN-A- 109 922 056
- US-A1- 2010 153 721
- US-A1- 2013 304 651
- US-A1- 2015 318 998
- US-A1- 2015 358 301
- US-A1- 2016 191 236
- US-A1- 2019 052 916

## Description

### TECHNICAL FIELD

This application relates to the field of information technologies, and in particular, to a method for securely processing data, and a terminal and a server thereof.

### BACKGROUND

A secure element (SE) refers to a logic circuit provided in a form of a chip that has an encryption/decryption function in the chip, to prevent external malicious analysis attacks and protect data security. The security of an Internet of Things (IoT) device is usually guaranteed by the SE. However, because of the cost sensitivity of the IoT devices, many devices do not have suitable conditions to configure a hardware SE. It is feasible to simulate an SE using software to provide a solution that balances costs and security.

US 2019/052916 A1 discloses devices, servers, systems and methods for content protection are provided. Disclosed embodiments improve temporal granularity of controlling access to the protected content and increase resilience against attacks attempting to prevent re-evaluation of conditions of access. Enforcement of re-evaluation may be based on the receipt and/or verification of tokens. In some embodiments, re-evaluation is enforced by periodically rendering content keys required for content decryption un-useable and/or clearing content keys already in use.

US 2015/358301 A1 discloses: Systems and methods for dynamic trusted execution environment (TEE) hardware configuration are provided. A key update message including key update information is received and authenticated for a key stored in the TEE of a mobile computing device. The stored key may define access to hardware resources of the mobile computing device. The hardware configuration for the stored key in the TEE may be changed based upon the key update information.

CN 109040147 A discloses a TEE + SE-based encryption and decryption method and system are provided. The method comprises the steps of: The SE security module receives instructions and data from a first channel or a second channel, and labels the channel source S1, wherein the first channel is connected between the TEE security unit and the SE security module, the second channel is connected between the rich OS unit and the SE security module; The SE security module obtains a label to obtain source information S2; The SE security module processes the instructions and data from different sources and distinguishes the rights S3. The technical proposal of the disclosure can remarkably reduce the delay of the symmetrical encryption and decryption calculation process, improve the data throughput, improve the processing speed and performance, and do not reduce the overall security of the cryptographic system.

US 2010/153721 A1 discloses portable electronic devices are provided including a virtual secure element module configured to access a remote secure element server. The virtual secure element module being configured to access the remote secure element server from the portable electronic device to provide a predetermined level of security for secure transactions. Related systems, methods and computer program products are also provided.

US 2015/318998 A1 discloses methods, systems and apparatus for performing client-server authentication using a device authentication and optional user authentication approach. In a device authentication stage, the client is unlocked to provide access to a cryptographic key used for authentication. In a user authentication stage, the user provides a personal data credential used to generate an additional cryptographic key.

US 2016/191236 A1 discloses a portable communication device may include a mobile application executing in an application execution environment and a secure application executing in a trusted execution environment. The secure application may receive, from the mobile application, a storage request to store sensitive data. The storage request may include an encrypted data type identifier and an encrypted sensitive data. The secure application may decrypt the encrypted data type identifier and the encrypted sensitive data using a transport key, and re-encrypt the sensitive data using a storage key. The re-encrypted sensitive data can then be stored in a memory of the portable communication device which is outside the trusted execution environment.

### SUMMARY

An objective of this application is to provide a method for securely processing data, and a terminal and a server thereof, to reduce costs of an IoT device by simulating a secure element (SE) using software.

According to a first aspect of this application, a method for securely processing data is provided, according to independent claim 1. Further embodiments of the method are provided in dependent claims 2-4.

According to a second aspect of this application, a computer-readable storage device is provided, according to independent claim 5.

According to a third aspect of this application, a terminal is provided. The terminal includes a memory configured to store computer program instructions and a processor configured to execute the computer program instructions, where when executed by the processor, the computer program instructions trigger the terminal to perform the method according to the first aspect of this application.

The method for securely processing data, and the terminal thereof provided in this application are simple to implement, and when in combination with device network capabilities, may provide safety guaranteeing capabilities that conform to the SE while overcoming drawbacks of difficult integration and high costs of the hardware SE, thereby reducing costs of an IoT device.

### BRIEF DESCRIPTION OF THE DRAWINGS

Other features, objectives, and advantages of this application become more obvious by reading the detailed description of non-limiting embodiments that is provided with reference to the following accompanying drawings:
FIG. 1 is a schematic flowchart of a method for securely processing data according to the first embodiment of this application;
FIG. 2 is a schematic flowchart of a method for securely processing data according to the second embodiment of this application;
FIG. 3 is a schematic structural diagram of a terminal according to the third embodiment of this application;
FIG. 4 is a schematic structural diagram of a server according to the fourth embodiment of this application; and
FIG. 5 is a schematic diagram of connection of a terminal and a server according to the fifth embodiment of this application.

The same or similar reference numerals in the drawings represent the same or similar components.

### DETAILED DESCRIPTION

This application is further described in detail below with reference to the accompanying drawings.

In a typical configuration of this application, a terminal and a service network device both include one or more processors (CPUs), an input/output interface, a network interface, and a memory.

The memory may include a form such as a volatile memory, a random-access memory (RAM) and/or a nonvolatile memory such as a read-only memory (ROM) or a flash RAM in a computer-readable medium. The memory is an example of the computer-readable medium.

The computer-readable medium includes a nonvolatile medium and a volatile medium, a removable medium and a non-removable medium, which may implement storage of information using any method or technology. The information may be computer-readable instructions, a data structure, a program apparatus, or other data. Examples of a storage medium of a computer include, but are not limited to, a phase change memory (PRAM), a static random access memory (SRAM), a dynamic random access memory (DRAM), or other types of RAM, a ROM, an erasable programmable read only memory (EEPROM), a flash memory or another storage technology, a compact disc read-only memory (CD-ROM), a digital versatile disc (DVD) or another optical storage, or a cartridge tape. A magnetic storage of a magnetic tape or a disc, another magnetic storage device, or any other non-transmission medium may be configured to store information that can be accessed by a computing device.

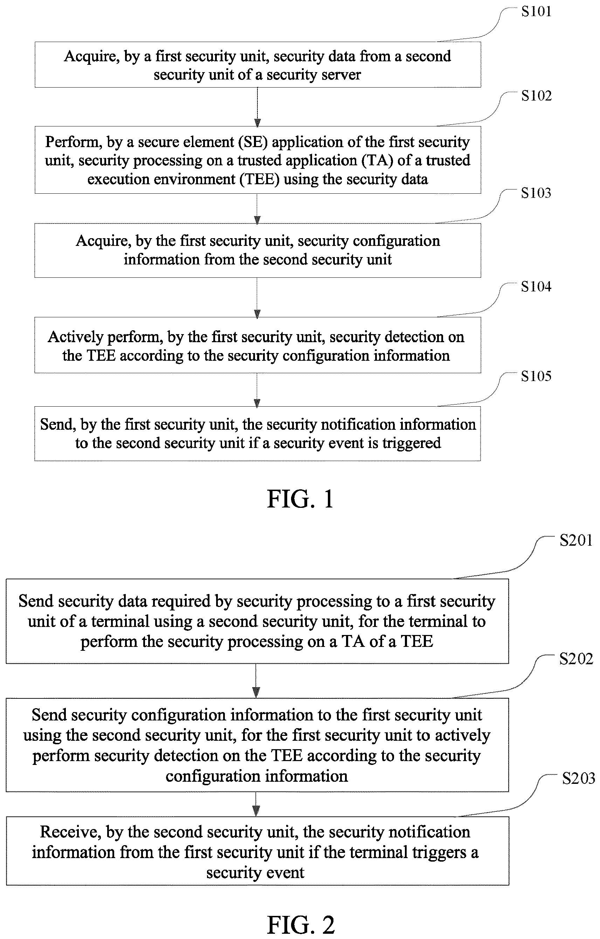

FIG. 1 is a schematic flowchart of a method for securely processing data according to the first embodiment of this application. As shown in FIG. 1, the method for securely processing data provided in the first embodiment of this application is applied to a terminal, and the method includes the following steps:
Step S101. Acquiring, by a first security unit, security data from a second security unit of a security server.
Step S102. Performing, by a secure element (SE) application of the first security unit, security processing on a trusted application (TA) of a trusted execution environment (TEE) using the security data.

For example, a first security unit in a form of a software module is configured on the terminal, and a second security unit in a form of a software module is configured on the security server. The first security unit and the second security unit jointly complete an SE function, and perform the security processing on the TA of the TEE through a security channel. The security processing includes at least one of the following: encryption, decryption, certificate verification, and security calculation based on a security algorithm. The first security unit communicates with the second security unit, to acquire the security data configured by the security server for security processing. The security data includes at least one of the following: key data, security certificate data, security random number data, and security algorithm data. After the first security unit acquires the security data from the second security unit, the security data is used for performing the security processing such as encryption, decryption, certificate verification, and security calculation on the TA.

Further, the first security unit includes a key management module. The security data includes key data.

The security processing includes: performing, by the SE application, encryption/decryption processing on processing data of the TA using the key data acquired from the second security unit.

For example, it is necessary to request encryption and decryption processing for the TA, the first security unit acquires a key from the second security unit using the key management module, and the first security unit uses the key to request encryption for the TA using the SE application of the first security unit. During encryption, a security algorithm module may be configured to acquire the security algorithm from the second security unit for encryption calculation. During the encryption calculation, a security random number generation module may be configured to acquire a security random number from the second security unit for encryption calculation. A decryption process is similar to the encryption process, and details are not described herein again.

Further, the first security unit includes a security certificate management module. The security data includes security certificate data.

The security processing includes: performing, by the SE application, certificate verification processing on the TA using the security certificate data acquired from the second security unit.

For example, certificate verification processing needs to be performed on the TA, the first security unit acquires the security certificate data from the second security unit using the security certificate management module, and the first security unit uses the security certificate data to perform certificate verification on the TA using the SE application of the first security unit.

Further, the first security unit includes a security random number generation module or a security algorithm module. The security data includes security random number data or security algorithm data.

The security processing includes: performing, by the SE application, security calculation processing using the security random number data or security algorithm data acquired from the second security unit.

The security algorithm module may be configured to acquire the security algorithm data from the second security unit, the security random number generation module may be configured to acquire the security random number data from the second security module, and the first security unit uses a security algorithm of the security algorithm data and a security random number in the security random number data to perform encryption or decryption security calculation using the SE application of the first security unit.

The key data, the security certificate data, the security random number data, the security algorithm data, and the like acquired by the first security unit from the second security unit may be stored in a security storage module of the first security unit, to save network traffic.

In the method for securely processing data according to the first embodiment of this application, an SE module jointly formed by the first security unit and the second security unit in a form of software modules replaces a hardware SE, and most of functions, for example, key management, security data management, a random number service, an encryption/decryption service, and a signature verification function, being up to the GP standard during running of the SE are provided. The hardware SE does not need to be configured in an IoT device, thereby reducing costs of the IoT device. In addition, because important data required by the key management, security data, random number service, encryption/decryption service, and signature verification service are managed and configured in a centralized manner using the security server, safety performance is further improved, thereby facilitating security data management and updating of SE applications and TA applications.

Further, the method according to the first embodiment of this application further includes the following steps:
Step S 103. Acquiring, by the first security unit, security configuration information from the second security unit.
Step S104. Actively performing, by the first security unit, security detection on the TEE according to the security configuration information.
Step S 105. Sending, by the first security unit, the security notification information to the second security unit if a security event is triggered.

For example, the security configuration information may include information such as a detection period, a detection object, and an abnormal event feature. The first security unit may perform abnormal event detection on a detection object of the TEE according to configuration of the security configuration information and the detection period. When an event is found to meet the abnormal event feature, it is determined to trigger the security event, and the first security unit sends a notification to the second security unit of the security server to make a security prompt.

Different from the hardware SE that can only be in a passive working state, in the method for securely processing data according to the first embodiment of this application, the security configuration information may be actively sent to the first security unit using the second security unit, to actively monitor an anomaly, and a network attack is actively sensed and is reported to the security server in real time by calling a network interface in real time.

FIG. 2 is a schematic flowchart of a method for securely processing data according to the second embodiment of this application. As shown in FIG. 2, the method for securely processing data provided in the second embodiment of this application is applied to a server, and the method includes the following steps:
Step S201. Sending security data required by security processing to a first security unit of a terminal using a second security unit, for the terminal to perform security processing on a TA of a TEE.

The first security unit in a form of a software module is configured on the terminal, and the second security unit in a form of a software module is configured on a security server. The first security unit and the second security unit jointly complete an SE function, and perform the security processing on the TA of the TEE through a security channel. The security processing includes at least one of the following: encryption, decryption, certificate verification, and security calculation based on a security algorithm. The first security unit communicates with the second security unit, to acquire the security data configured by the security server for security processing. The security data includes at least one of the following: key data, security certificate data, security random number data, and security algorithm data. After the first security unit acquires the security data from the second security unit, the security data is used for performing the security processing such as encryption, decryption, certificate verification, and security calculation on the TA.

Further, the security data includes at least one of the following: key data, security certificate data, security random number data, and security algorithm data.

For example, the first security unit acquires the key data from the second security unit using the key management module, acquires the security certificate data from the second security unit using the security certificate management module, acquires the security algorithm data from the second security unit using the security algorithm module, and acquires the security random number data from the second security module using the security random number generation module.

In the method for securely processing data according to the second embodiment of this application, an SE module jointly formed by the first security unit and the second security unit in a form of software modules replaces a hardware SE, and most of functions, for example, key management, security data management, a random number service, an encryption/decryption service, and a signature verification capability, being up to the GP standard during running of the SE are provided. The hardware SE does not need to be configured in an IoT device, thereby reducing costs of the IoT device. In addition, because important data required by the key management, security data, random number service, encryption/decryption service, and signature verification service are managed and configured in a centralized manner using the security server, safety performance is further improved, thereby facilitating security data management and updating of SE applications and TA applications.

Further, the method for securely processing data according to the second embodiment of this application further includes the following steps:
Step S202. Sending security configuration information to the first security unit using the second security unit, for the first security unit to actively perform security detection on the TEE according to the security configuration information.
Step S203. Receiving, by the second security unit, the security notification information from the first security unit if the terminal triggers a security event.

For example, the security configuration information may include information such as a detection period, a detection object, and an abnormal event feature. The first security unit may perform abnormal event detection on a detection object of the TEE according to configuration of the security configuration information and the detection period. When an event is found to meet the abnormal event feature, it is determined to trigger the security event, and the first security unit sends a notification to the second security unit of the security server to make a security prompt to the security server.

Different from a hardware SE that can only be in a passive working state, in the method for securely processing data according to the second embodiment of this application, the security configuration information may be actively sent to the first security unit using the second security unit, to actively monitor an anomaly, and a network attack is actively sensed and is reported to the security server in real time by calling a network interface in real time.

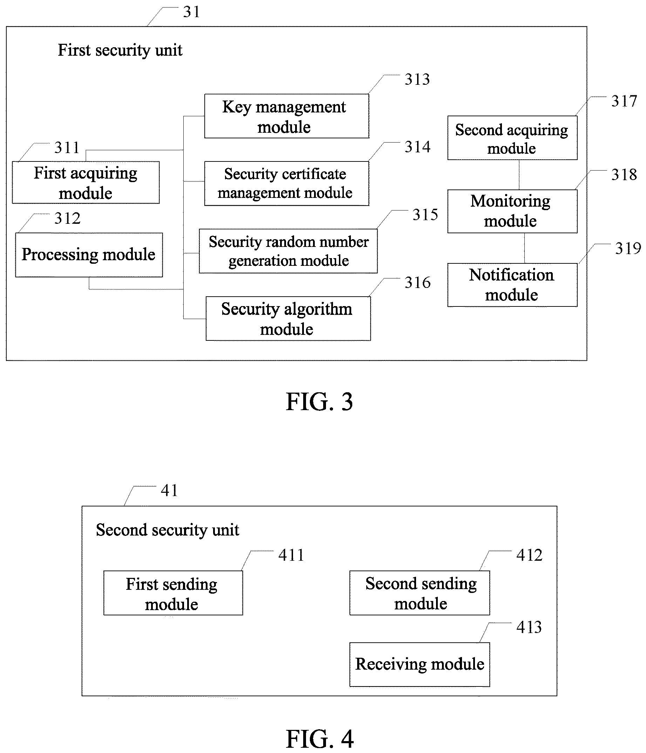

FIG. 3 is a schematic structural diagram of a terminal according to the third embodiment of this application. As shown in FIG. 3, the terminal provided in the third embodiment of this application includes a first security unit 31.

The first security unit 31 includes a first acquiring module 311 and a processing module 312.

The first acquiring module 311 is configured to acquire security data from a second security unit of a security server.

The processing module 312 is configured to manage an SE application and the security data.

The SE application performs security processing on a TA of a TEE using the security data.

Further, the security data includes key data.

The first security unit 31 further includes a key management module 313.

The key management module 313 is configured to manage the key data.

The SE application performs encryption/decryption processing on processing data of the TA using the key data acquired from the second security unit.

Further, the security data includes security certificate data.

The first security unit 31 further includes a security certificate management module 314.

The security certificate management module 314 is configured to manage the security certificate data.

The SE application performs certificate verification processing on the TA using the security certificate data acquired from the second security unit.

Further, the security data includes security random number data.

The first security unit 31 further includes a security random number generation module 315.

The security random number generation module 315 is configured to manage the security random number data.

Further, the security data includes security algorithm data.

The first security unit 31 further includes a security algorithm module 316.

The security algorithm module 316 is configured to manage the security algorithm data.

The SE application performs security calculation processing using the security random number data or security algorithm data acquired from the second security unit.

Further, the first security unit 31 further includes a second acquiring module 317, a monitoring module 318, and a notification module 319.

The second acquiring module 317 is configured to acquire security configuration information from the second security unit.

The monitoring module 318 is configured to actively perform security detection on the TEE according to the security configuration information.

The notification module 319 is configured to send the security notification information to the second security unit if a security event is triggered.

The terminal according to the third embodiment of this application is an implementation apparatus of the method for securely processing data shown in FIG. 1. Reference may be made to the first embodiment in FIG. 1, and details are not described herein again.

FIG. 4 is a schematic structural diagram of a server according to the fourth embodiment of this application. As shown in FIG. 4, the server provided in the fourth embodiment of this application includes a second security unit 41.

The second security unit 41 includes a first sending module 411.

The first sending module 411 is configured to send security data required by security processing to a first security unit of a terminal, for the terminal to perform security processing on a TA of a TEE.

Further, the security data includes at least one of the following: key data, security certificate data, security random number data, and security algorithm data.

Further, the second security unit 41 includes a second sending module 412 and a receiving module 413.

The second sending module 412 is configured to send security configuration information to the first security unit, for the first security unit to actively perform security detection on the TEE according to the security configuration information.

The receiving module 413 is configured to receive the security notification information sent by the first security unit if the terminal triggers a security event.

The server according to the fourth embodiment of this application is an implementation apparatus of the method for securely processing data shown in FIG. 2. Reference may be made to the second embodiment in FIG. 2, and details are not described herein again.

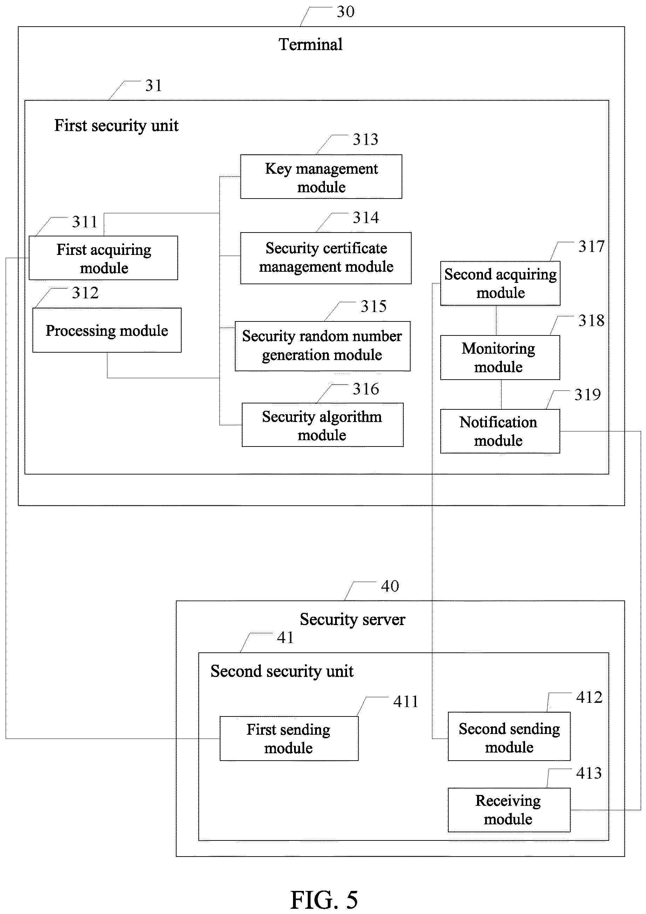

FIG. 5 is a schematic diagram of connection of a terminal and a server according to the fifth embodiment of this application. As shown in FIG. 5, a terminal 30 is provided with the first security unit 31 in a form of a software module, and a security server 40 is provided with the second security unit 41 in a form of a software module.

The first security unit 31 acquires security data from the first sending module 411 of the second security unit 41 using the first acquiring module 311. The security data includes at least one of the following: key data, security certificate data, security random number data, and security algorithm data. The key management module 313 acquires the key data from the first acquiring module 311 and manages the key. The security certificate management module 314 acquires the security certificate data from the first acquiring module 311 and manages the security certificate. The security random number generation module 315 acquires the security random number data from the first acquiring module 311 and manages the security random number. The security algorithm module 316 acquires the security algorithm data from the first acquiring module 311 and manages the security algorithm. The processing module 312 of the first security unit 31 manages the SE application. When the SE application needs to use the security data, the processing module 312 respectively retrieves the key, the security certificate, the security random number, the security algorithm, and the like from the key management module 313, the security certificate management module 314, the security random number generation module 315, and the security algorithm module 316, to perform security processing on the TA.

The first security unit 31 acquires the security configuration information from the second sending module 412 of the second security unit 41 using the second acquiring module 317, and the monitoring module 318 actively performs security detection on the TEE according to the security configuration information. If a security event is triggered, the notification module 319 sends the security notification information to the receiving module 413 of the second security unit 41, to prompt the security server that the TEE located at the terminal is abnormal.

The embodiments of this application further provide a storage device. The storage device stores computer program instructions, and the computer program instructions implement the method according to the first embodiment or the second embodiment of this application.

The embodiments of this application further provide a terminal. The terminal includes a memory configured to store computer program instructions and a processor configured to execute the computer program instructions, where when executed by the processor, the computer program instructions trigger the terminal to perform the method according to the first embodiment of this application.

According to a seventh aspect of this application, a server is provided. The server includes a memory configured to store computer program instructions and a processor configured to execute the computer program instructions, where when executed by the processor, the computer program instructions trigger the server to perform the method according to the second embodiment of this application.

The terminal described in this application includes but not limited to any electronic product that can perform human-computer interaction (for example, perform human-computer interaction using a touchpad) with a user, such as a smartphone, a tablet computer, or another mobile electronic product. The mobile electronic product may use any operating system such as Android operating system or iOS operating system. The server includes an electronic device that can automatically perform numerical calculation and information processing according to predetermined or pre-stored instructions. Hardware of the server includes but not limited to a microprocessor, an application-specific integrated circuit (ASIC), a programmable logic device (PLD), a field programmable gate array (FPGA), a digital signal processor (DSP), an embedded device, and the like. The server includes but not limited to a computer, a network host, a single network server, a plurality of network server sets, or a cloud formed by a plurality of servers. Herein, the cloud is formed by a large number of computers or network servers based on cloud computing, where the cloud computing is one type of distributed computing, and the cloud is a virtual supercomputer formed by a group of loosely-coupled computer sets. The network includes but not limited to the Internet, a wide area network, a metropolitan area network, a local area network, a VPN network, a mobile ad-hoc network, and the like. Preferably, the terminal and the server may further be programs running on the terminal, the server, or a device formed by integration of the terminal and the server through the network.

It should be noted that this application may be implemented by hardware and/or software, or a combination of software and hardware, for example, may be implemented using an ASIC, a general-purpose computer, or any other similar hardware device. In some embodiments, software programs of this application may be performed by a processor to implement the foregoing steps or functions. Similarly, the software programs (including a related data structure) of this application may be stored in a computer-readable recording medium, for example, a RAM, a magnetic or optical drive or floppy disk and similar devices. In addition, some steps or functions of this application may be implemented using hardware, for example, a circuit that cooperates with a processor to perform various steps or functions.

It is apparent to a person skilled in the art that this application is not limited to details in the foregoing exemplary embodiments, and this application can be implemented in another specific form without departing from the basic features of this application. Therefore, the embodiments should be considered to be exemplary in all respects and not limitative. The scope of this application is not defined by the foregoing description but by the appended claims. No reference numerals in the claims should be considered as limitations to the related claims. In addition, it is apparent that the term "comprise", "include" or any variant thereof does not exclude other units or steps, and the singular does not exclude the plural. A plurality of units or apparatuses described in the apparatus claims may also be implemented by a unit or an apparatus by software or hardware. The words such as "first" and "second" are only used to denote names, and do not denote any particular order.

## Claims

1. A method for securely processing data, comprising:
acquiring, by a first security unit (31), security data from a second security unit (41) of a security server (40), wherein the first security unit (31) is configured on a terminal (40) in form of a software module and the second security unit (41) is configured on the security server (40) in form of a software module, and wherein the first security unit (31) comprises a key management module and the security data comprises key data;
performing, by a secure element, SE, application of the first security unit (31), security processing on a trusted application, TA, of a trusted execution environment, TEE, using the security data,
wherein the security processing comprises: performing, by the SE application, encryption/decryption processing on processing data of the TA using the key data acquired from the second security unit (41).

2. The method according to claim 1, wherein
the first security unit (31) comprises: a security certificate management module (314); the security data comprises: security certificate data; and
the security processing comprises: performing, by the SE application, certificate verification processing on the TA using the security certificate data acquired from the second security unit (41).

3. The method according to claim 1, wherein
the first security unit (31) comprises: a security random number generation module (315) or a security algorithm module (316);
the security data comprises: security random number data or security algorithm data; and
the security processing comprises: performing, by the SE application, security calculation processing using the security random number data or security algorithm data acquired from the second security unit (41).

4. The method according to any one of claims 1 to 3, wherein the method further comprises:
acquiring, by the first security unit (31), security configuration information from the second security unit (41);
actively performing, by the first security unit (31), security detection on the TEE according to the security configuration information; and
sending, by the first security unit (31), security notification information to the second security unit (41) if a security event is triggered.

5. A computer-readable storage device, storing computer program instructions, which when executed by a computer, cause the computer to carry out the method according to any one of claims 1 to 4.

6. A terminal (30), comprising a memory configured to store computer program instructions and a processor configured to execute the computer program instructions, wherein when executed by the processor, the computer program instructions trigger the terminal (30) to perform the method according to any one of claims 1 to 4.

## Patentansprüche

1. Verfahren zum sicheren Verarbeiten von Daten, umfassend:
Erfassen, durch eine erste Sicherheitseinheit (31), von Sicherheitsdaten von einer zweiten Sicherheitseinheit (41) eines Sicherheitsservers (40), wobei die erste Sicherheitseinheit (31) auf einem Endgerät (40) in Form eines Softwaremoduls eingerichtet ist und die zweite Sicherheitseinheit (41) auf dem Sicherheitsserver (40) in Form eines Softwaremoduls eingerichtet ist, und wobei die erste Sicherheitseinheit (31) ein Schlüsselverwaltungsmodul umfasst und die Sicherheitsdaten Schlüsseldaten umfassen;
Durchführen, durch eine Anwendung eines sicheren Elements, SE, der ersten Sicherheitseinheit (31), einer Sicherheitsverarbeitung an einer vertrauenswürdigen Anwendung, TA, einer vertrauenswürdigen Ausführungsumgebung, TEE, unter Verwendung der Sicherheitsdaten,
wobei die Sicherheitsverarbeitung umfasst: Durchführen, durch die SE-Anwendung, einer Verschlüsselungs-/Entschlüsselungsverarbeitung an Verarbeitungsdaten der TA unter Verwendung der von der zweiten Sicherheitseinheit (41) erfassten Schlüsseldaten.

2. Verfahren nach Anspruch 1, wobei
die erste Sicherheitseinheit (31) umfasst: ein Sicherheitszertifikatverwaltungsmodul (314);
die Sicherheitsdaten umfassen: Sicherheitszertifikatdaten; und
die Sicherheitsverarbeitung umfasst: Durchführen, durch die SE-Anwendung, einer Zertifikatverifizierungsverarbeitung an der TA unter Verwendung der von der zweiten Sicherheitseinheit (41) erfassten Sicherheitszertifikatdaten.

3. Verfahren nach Anspruch 1, wobei
die erste Sicherheitseinheit (31) umfasst: ein Sicherheitszufallszahlenerzeugungsmodul (315) oder ein Sicherheitsalgorithmusmodul (316);
die Sicherheitsdaten umfassen: Sicherheitszufallszahlendaten oder Sicherheitsalgorithmusdaten; und
die Sicherheitsverarbeitung umfasst: Durchführen, durch die SE-Anwendung, einer Sicherheitsberechnungsverarbeitung unter Verwendung der von der zweiten Sicherheitseinheit (41) erfassten Sicherheitszufallszahlendaten oder Sicherheitsalgorithmusdaten.

4. Verfahren nach einem der Ansprüche 1 bis 3, wobei das Verfahren ferner umfasst:
Erfassen, durch die erste Sicherheitseinheit (31), von
Sicherheitskonfigurationsinformationen von der zweiten Sicherheitseinheit (41);
aktives Durchführen, durch die erste Sicherheitseinheit (31), einer Sicherheitserkennung an der TEE gemäß den Sicherheitskonfigurationsinformationen; und
Senden, durch die erste Sicherheitseinheit (31), von Sicherheitsbenachrichtigungsinformationen an die zweite Sicherheitseinheit (41), wenn ein Sicherheitsereignis ausgelöst wird.

5. Computerlesbare Speichervorrichtung, die Computerprogrammanweisungen speichert, die, wenn sie durch einen Computer ausgeführt werden, den Computer veranlassen, das Verfahren nach einem der Ansprüche 1 bis 4 durchzuführen.

6. Endgerät (30), umfassend einen Speicher, der eingerichtet ist, Computerprogrammanweisungen zu speichern, und einen Prozessor, der eingerichtet ist, die Computerprogrammanweisungen auszuführen, wobei, wenn sie durch den Prozessor ausgeführt werden, die Computerprogrammanweisungen das Endgerät (30) dazu veranlassen, das Verfahren nach einem der Ansprüche 1 bis 4 durchzuführen.

## Revendications

1. Procédé de traitement sécurisé de données, comprenant :
l'acquisition, par une première unité de sécurité (31), de données de sécurité à partir d'une seconde unité de sécurité (41) d'un serveur de sécurité (40), dans lequel la première unité de sécurité (31) est configurée sur un terminal (40) sous la forme d'un module logiciel et la seconde unité de sécurité (41) est configurée sur le serveur de sécurité (40) sous la forme d'un module logiciel, et dans lequel la première unité de sécurité (31) comprend un module de gestion de clé et les données de sécurité comprennent des données de clé ;
la réalisation, par une application d'élément sécurisé, SE, de la première unité de sécurité (31), d'un traitement de sécurité sur une application de confiance, TA, d'un environnement d'exécution de confiance, TEE, en utilisant les données de sécurité,
dans lequel le traitement de sécurité comprend : la réalisation, par l'application SE, d'un traitement de chiffrement/déchiffrement sur des données de traitement de la TA en utilisant les données de clé acquises de la seconde unité de sécurité (41).

2. Procédé selon la revendication 1, dans lequel
la première unité de sécurité (31) comprend : un module de gestion de certificat de sécurité (314) ;
les données de sécurité comprennent : des données de certificat de sécurité ; et
le traitement de sécurité comprend : la réalisation, par l'application SE, d'un traitement de vérification de certificat sur la TA en utilisant les données de certificat de sécurité acquises de la seconde unité de sécurité (41).

3. Procédé selon la revendication 1, dans lequel
la première unité de sécurité (31) comprend : un module de génération de nombre aléatoire de sécurité (315) ou un module d'algorithme de sécurité (316) ;
les données de sécurité comprennent : des données de nombre aléatoire de sécurité ou des données d'algorithme de sécurité ; et
le traitement de sécurité comprend : la réalisation, par l'application SE, d'un traitement de calcul de sécurité en utilisant les données de nombre aléatoire de sécurité ou les données d'algorithme de sécurité acquises de la seconde unité de sécurité (41).

4. Procédé selon l'une quelconque des revendications 1 à 3, dans lequel le procédé comprend en outre :
l'acquisition, par la première unité de sécurité (31), d'informations de configuration de sécurité de la seconde unité de sécurité (41) ;
la réalisation active, par la première unité de sécurité (31), d'une détection de sécurité sur le TEE en fonction des informations de configuration de sécurité ; et
l'envoi, par la première unité de sécurité (31), d'informations de notification de sécurité à la seconde unité de sécurité (41) si un événement de sécurité est déclenché.

5. Dispositif de stockage lisible par ordinateur, stockant des instructions de programme informatique qui, lorsqu'elles sont exécutées par un ordinateur, amènent l'ordinateur à réaliser le procédé selon l'une quelconque des revendications 1 à 4.

6. Terminal (30), comprenant une mémoire configurée pour stocker des instructions de programme informatique et un processeur configuré pour exécuter les instructions de programme informatique, dans lequel, lorsqu'elles sont exécutées par le processeur, les instructions de programme informatique déclenchent le terminal (30) pour réaliser le procédé selon l'une quelconque des revendications 1 à 4.
